# EUROPEAN PATENT SPECIFICATION

(11) **EP 1 627 342 B1**
(45) Date of publication and mention of the grant of the patent: **25.07.2007**
(21) Application number: 04760973.0
(22) Date of filing: 10.05.2004
(51) Int. Cl.: G06K 7/00, H04B 1/38, H01R 13/50

(54) **MEMORY CARD CONNECTOR**
SPEICHERKARTENVERBINDER
CONNECTEUR DE CARTES MEMOIRE

(30) Priority: 12.05.2003 JP 2003132965
(43) Date of publication of application: 22.02.2006
(73) Proprietor: MOLEX INCORPORATED, Lisle Illinois 60532-1682 (US)
(72) Inventor: HIRATA, Toshihisa, Yamato-shi, Kanagawa 242-0018 (JP)
(74) Representative: Herden, Andreas F.
(86) International application number: PCT/US2004/014592
(87) International publication number: WO 2004/102466

(56) References cited:
- US-A- 4 602 351
- PATENT ABSTRACTS OF JAPAN vol. 1998, no. 09, 31 July 1998 (1998-07-31) -& JP 10 106674 A (HOSIDEN CORP), 24 April 1998 (1998-04-24) cited in the application

## Description

### Field of the Invention:

This invention generally relates to the art of electrical connectors and, particularly, to a memory card connector. The invention is specifically directed to a memory card connector which includes a cover and an improved means for preventing the cover from being opened to an over-stressed condition.

### Background of the Invention:

Memory cards are known in the art and contain intelligence in the form of a memory circuit or other electronic program. Some form of card reader reads the information or memory stored on the card. Such cards are used in many applications in today's electronic society, including video cameras, digital still cameras, smartphones, music players, ATMs, cable television decoders, toys, games, PC adapters, multi-media cards and other electronic applications. Typically, a memory card includes a contact or terminal array for connection through a card connector to a card reader system and then to external equipment. The connector readily accommodates insertion and removal of the card to provide quick access to the information and program on the card. The card connector includes terminals for yieldingly engaging the contact array of the memory card.

For instance, a portable telephone is provided with a memory card capable of storing such information as a telephone number, melody information of incoming sound or the like along with subscriber identification information. The memory card can be inserted into and withdrawn from a memory card connector attached to a main body of the portable telephone. When the memory card is inserted into the card connector, the information stored on the card can be used. Therefore, even in the case of interchanging a portable telephone with a new telephone, it is not necessary for a user to write or rewrite new information on a memory card.

A typical memory card connector is provided with a dielectric housing in the form of a base on which the contacts or terminals are mounted. A cover is attached to the base and is movable between an open position and a closed position relative to the base. A memory card is inserted into the cover when the cover is in its open position, and the cover and memory card then can be moved relative to the base to bring the contacts on the card into engagement with the terminals on the base. An example of such a card connector is shown in Japanese publication JP 10-106674 A. Another example is US-A-4602351.

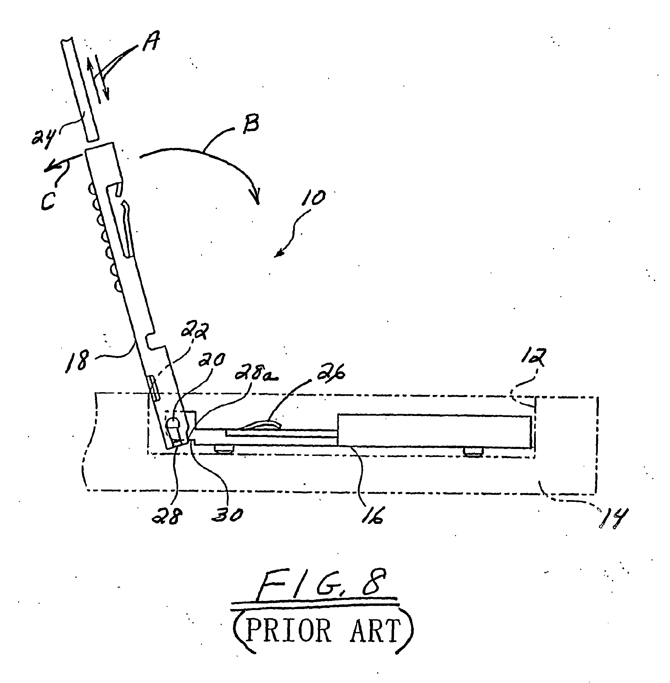

In addition, FIG. 8 shows a conventional memory card connector, generally designated 10, mounted in a recess or cavity 12 of a portable telephone 14. The connector includes a housing 16 and a cover 18 which pivots about an axis 20 relative to the housing.

Connector 10 is fixed in place within recess 12 by soldering terminals (not shown) mounted on housing 16 to a substrate (not shown) mounted within the recess. The cover is moved from a closed position to an open position as shown, whereat the cover comes into abutment with an edge 22 of recess 12. In the open position, a memory card can be inserted into and withdrawn from cover 18 in the direction of arrows "A". Once the memory card is inserted into the cover, the cover is pivoted downwardly in the direction of arrow "B" to bring conductive contacts on the memory card into engagement with resilient contact portions 26 of the terminals mounted on housing 16.

Still referring to FIG. 8, problems are encountered with such memory card arrangements if excessive forces are applied to the cover in the direction of arrow "C" when the cover is in the open position, as shown. When the excessive forces are applied to the free end of the cover, edge 22 acts as a fulcrum and tends to lift housing 16 out of recess 12, or the cover, itself, becomes deformed or broken. Consequently, a restraining piece 28 extends across the cover and has an edge 28a for engaging a lower surface 30 of the housing. The restraining piece engages lower surface 30 by a line contact or abutment and, therefore, stress concentrations can easily occur. If the excessive pivoting forces on the cover in the direction of arrow "C" are large enough, the restraining piece can be deformed or broken because of the stress concentration along the line contact between the restraining piece and lower surface 30 of the housing.

The present invention is directed to solving the above problems by providing a memory card connector of the character described with improved means to prevent the cover of the connector from being opened an excessive amount.

### Summary of the Invention:

An object, therefore, of the invention is to provide a new and improved memory card connector of the character described.

In the exemplary embodiment of the invention, a memory card connector receives a memory card having a plurality of conductive contacts. An insulative housing of the connector mounts a plurality of conductive terminals. A cover has receptacle means for receiving the memory card. The cover is pivotally mounted on the housing for pivotal movement between an open position to allow the memory card to be inserted into the receptacle means and a closed position bringing the contacts of the memory card into engagement with the terminals on the housing. A generally flat first stop surface is formed on the housing. A restraining member on the cover defines a generally flat second stop surface which comes into surface contact with the first flat stop surface on the housing when the cover is opened to prevent the cover from being opened beyond a predetermined amount. The abutting first and second stop surfaces being flat, stress concentrations are prevented to prevent deformation or damage to the components.

As disclosed herein, the cover is stamped and formed of sheet metal material, and the restraining member is formed integrally therewith. The housing is molded of dielectric plastic material, and the generally flat first stop surface is molded on an outside surface of the housing.

According to one aspect of the invention, the restraining member comprises a stop arm cantilevered from a rear end of the cover near a rear pivot means between the cover and the housing. The first flat stop surface is located at a rear end of the housing.

According to another aspect of the invention, the housing has an arcuate surface concentric with the rear pivot means and leading into the first flat stop surface. The second flat stop surface of the restraining member rides over the arcuate surface and against the first flat stop surface when the cover is opened.

Other objects, features and advantages of the invention will be apparent from the following detailed description taken in connection with the accompanying drawings.

### Brief Description of the Drawings:

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:
FIG. 1 is a perspective view of a memory card connector according to the invention, with the cover of the connector being shown in phantom in its open position and a memory card about to the inserted into the cover, the cover being shown in full lines in its closed position;
FIG. 2 is a perspective view of the connector, with the memory card inserted into the cover and the cover pivoted to its closed position;
FIG. 3 is a top plan view of the connector in the condition of FIG. 2;
FIG. 4 is a view similar to that of FIG. 2, with the cover slidably moved from the closed position of FIG. 2 to its latched position;
FIG. 5 is a fragmented perspective view of the rear end of the connector housing and the mounted end of the cover;
FIG. 6 is an enlarged perspective view of the area of the connector housing which includes the pivot means for the cover;
FIG. 7 is a view similar to that of FIG. 6, showing the cover in phantom and in its various positions of pivotal movement; and
FIG. 8 is a side elevational view of the memory card connector of the prior art described in the "Background", above.

### Detailed Description of the Preferred Embodiment:

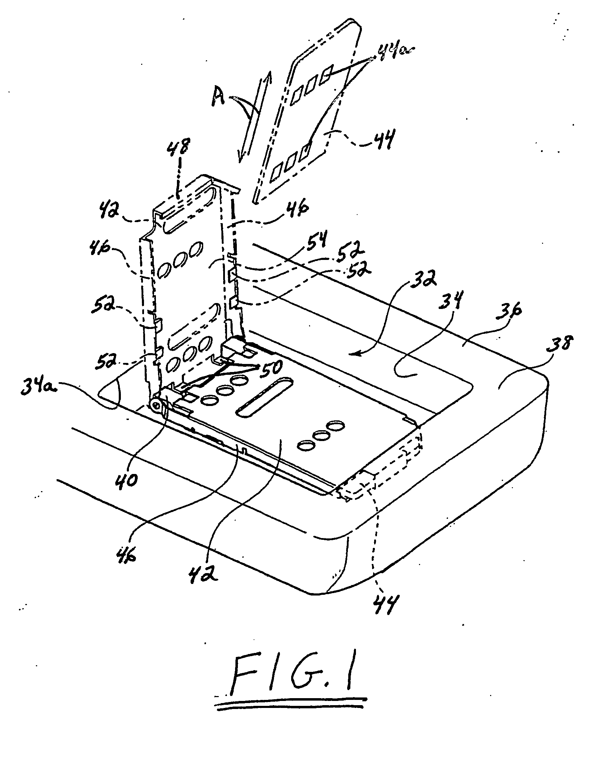

Referring to the drawings in greater detail, and first to FIG. 1, the invention is embodied in a memory card connector, generally designated 32, which is shown mounted within a recess or cavity 34 of a portable telephone 36. The recess has a top rear edge 34a. The recess is in a casing 38 of the portable telephone. The connector is mounted on a substrate or printed circuit board fixed in the recess.

Generally, memory card connector 32 includes an insulative housing 40 which mounts a plurality of conductive terminals (described hereinafter). A cover 42 is pivotally mounted to the housing for movement between a closed position shown in full lines in FIG. 1 and an open position shown in phantom in FIG. 1. The cover has receptacle means for receiving a memory card 44 inserted into and withdrawn from the cover in the direction of arrows "A". The memory card has conductive contacts 44a on a bottom surface thereof for engaging the terminals mounted on housing 40. The receptacle means on cover 42 for receiving memory card 44 is on the underside of the cover and is defined by a pair of side walls 46, a front wall 48, a pair of rear tabs 50 and a plurality of inwardly turned flanges 52. The memory card becomes sandwiched between flanges 52 and a top wall 54 of the cover. When the cover is moved from its open position to its closed position, the inserted memory card moves therewith to bring contacts 44a on the underside of memory card 44 into engagement with the terminals on the housing.

Cover 42 may be stamped and formed of sheet metal material. Housing 40 may be molded of dielectric plastic material.

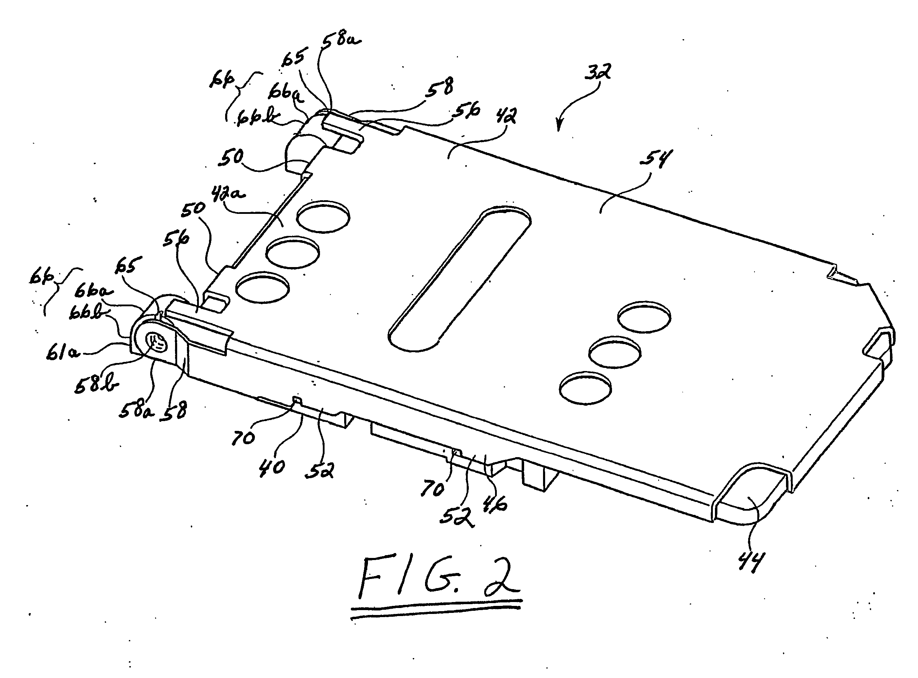

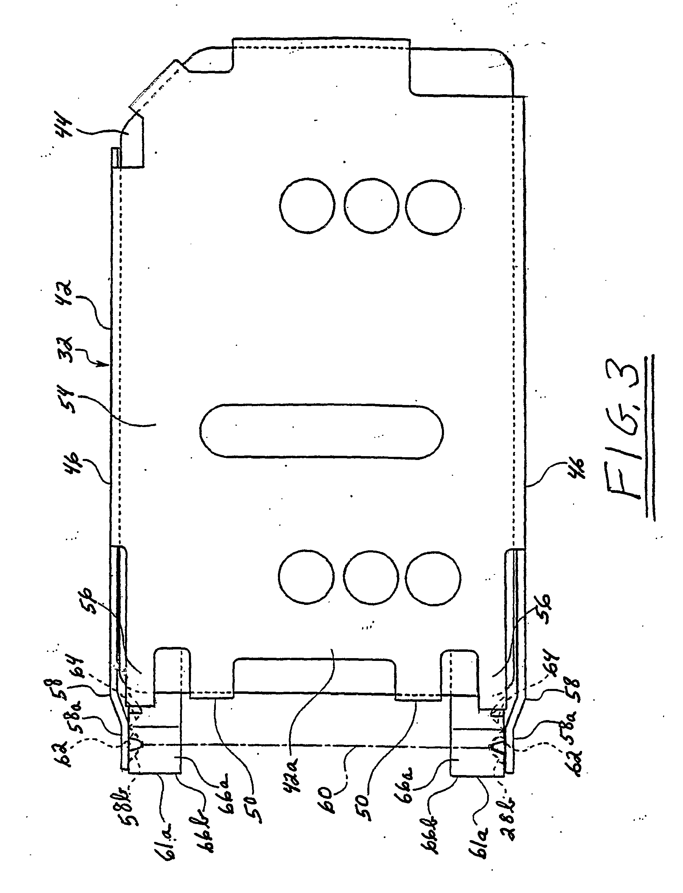

Referring to FIGS. 2 and 3, cover 42 has a pair of restraining members 56 which project rearwardly at opposite sides of a rear end 42a of the cover. The restraining members are in the form of a pair of stop arms which are cantilevered from rear end 42a. The arms define stop surfaces, for purposes described hereinafter. FIGS. 2 and 3 also show that cover 42 has a pair of pivot arms 58 which project rearwardly of the cover, as extensions of side walls 46. Pivot arms 58 constitute spring arms in that free ends 58a of the pivot arms can flex outwardly. A conically shaped pivot projection 58b is formed from free end 58a of each pivot arm. The conically shaped pivot projections point inwardly toward each other on an imaginary pivot line 60 (Fig. 3). Pivot projections 28b perform a dual function of providing pivoting means for cover 42 as well as being part of a detent means for defining the sliding latched position of the cover, as described hereinafter.

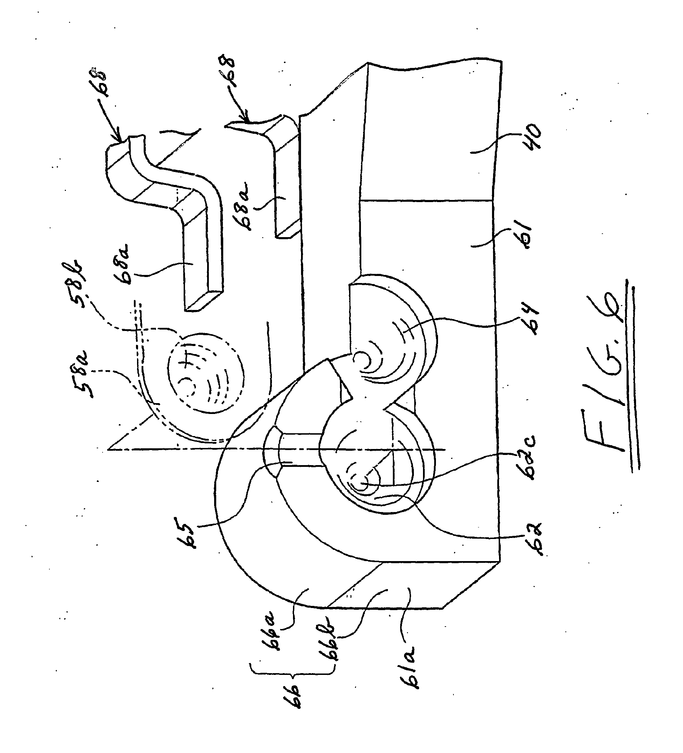

Referring to FIG. 6 in conjunction with FIGS. 2 and 3, housing 40 has a pair of cover attaching arms 61 projecting rearwardly thereof at opposite sides of the housing. The arms have enlarged distal ends 61a. A conically shaped pivot socket 62 and a conically shaped latching socket 64 are formed in the outside surfaces of each cover attaching arm 61. The conically shaped pivoting socket 62 has an apex 62c which is coincident with imaginary pivot line 60 (Fig. 3). A vertical access groove 66 leads downwardly to pivoting socket 62. The enlarged distal end 61a of each cover attaching arm 61 has a surface configuration 66 which includes an upper arcuate surface 66a which leads into a flat stop surface 66b. The upper arcuate surface 66a is concentric with apex 62c of pivoting socket 62 and concentric with pivot line 60 (Fig. 3). Finally, FIG. 6 shows a pair of the plurality of terminals, generally designated 68, mounted on housing 40 and including tails portions 68a for electrical connection to the substrate or circuit board within recess 34 of portable telephone 36.

Cover 42 is mounted to housing 40 by inserting the apexes of conically shaped pivot projections 58b of the cover through access grooves 65 and into pivoting sockets 62 in the outsides of enlarged distal ends 61 a of cover attaching arms 61. The cover then is free to pivot between its open and closed positions as pivot projections 58b and pivoting sockets 62 provide the pivoting means between the cover and the housing. When the cover is mounted to the housing, free ends 58a of pivot arms 58 of the cover flex outwardly until pivot projections 58b "snap" into pivoting sockets 62. With the cover in its open position as shown in FIG. 1, memory card 44 now can be inserted into the underside of the cover as described above.

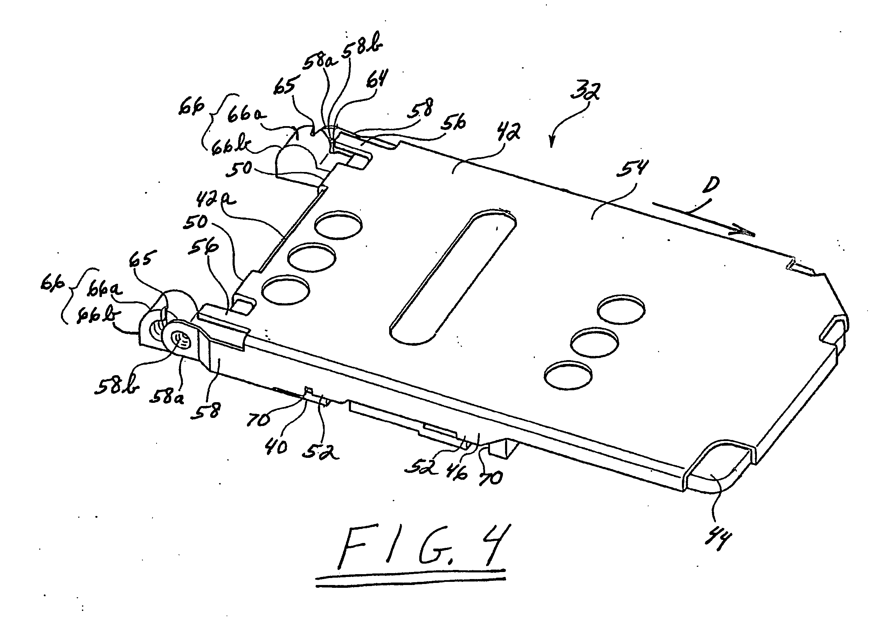

After memory card 44 is inserted into cover 46 in the open position of the cover, the cover and card then can be pivoted downwardly about pivot projections 58b on the cover and pivoting sockets 62 in the housing to its closed position shown in FIGS. 2 and 3. The cover then is slidably moved in the direction of arrow "D" (Fig. 4) to a latched position of the cover. During this sliding movement, pivot projections 58b on the cover move from pivoting sockets 62 into latching sockets 64 as shown in FIG. 6. When the cover reaches its latched position as defined by latching sockets 64, the latching of the cover is effected by the inwardly turned flanges 52 of the cover moving into latching recesses 70 formed in outside walls of housing 40. The cover now cannot be lifted upwardly away from the housing unless the cover is slidably moved back from its latched position shown in FIG. 4 opposite the direction of arrow "D", whereupon latching projections 58b on the cover move back into pivoting sockets 62 of the housing.

The invention contemplates an improved means for preventing cover 42 from being pivoted an excess amount beyond a predetermined open position. Summarily, the restraining means is provided by a generally flat first stop surface on the housing which is engageable by a generally flat second stop surface on the cover when the cover reaches an open position generally 90° to the cover. Specifically, the first flat stop surface on the housing is provided by flat stop surface 66b (Fig. 6) of the surface configuration 66 at the top of enlarged distal end 61a of each cover attaching arm 61 of the housing. The second flat stop surface is provided by the restraining members or stop arms 56 of cover 42 which are cantilevered from rear end 42a of the cover as described above in relation to FIGS. 2 and 3.

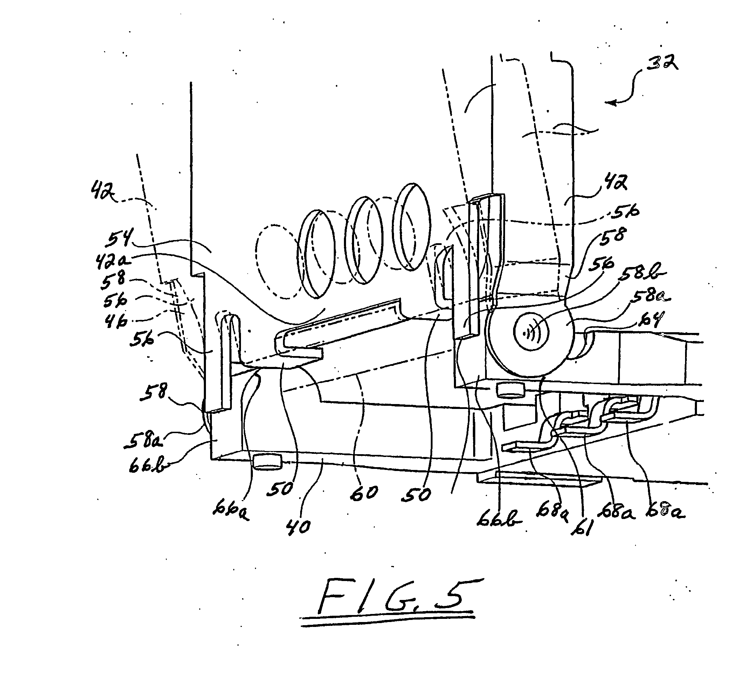

More particularly, FIG. 5 shows cover 42 pivoted upwardly to its fully open position. It can be seen that stop arms 56 present flat surfaces for engaging flat stop surfaces 66b of the housing. This flat surface engagement between the cover and the housing prevents excessive upward pivoting movement of the cover beyond a predetermined amount if excessive forces are applied to the cover in the direction of arrow "E". In fact, the cover will never even engage top rear edge 34a (Fig. 1) of recess 34 of the portable telephone.

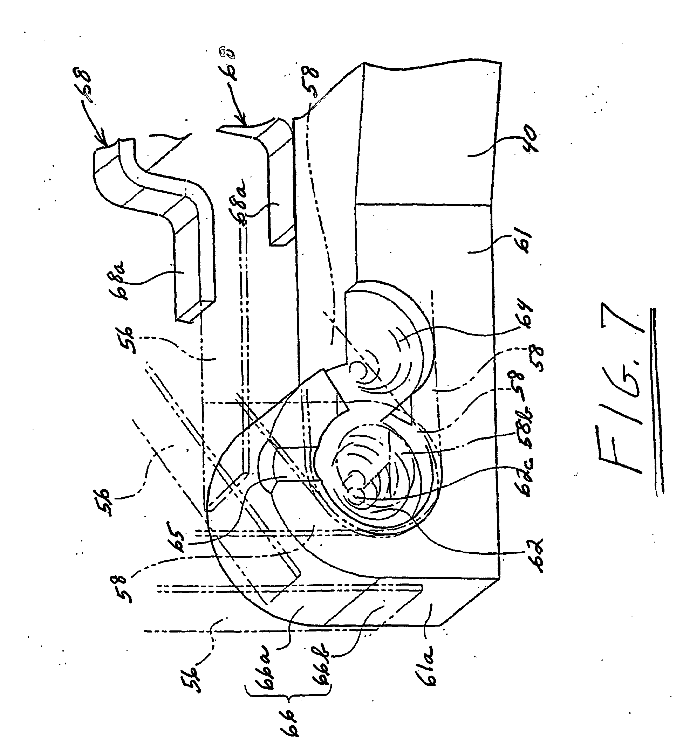

FIG. 7 shows, in phantom, various positions of stop arms 56 as the cover pivots upwardly from its closed position to its open position. During such pivotal movement, stop arms 56 ride along upper arcuate surfaces 66a of surface configurations 66 on the housing and then into "stopping" abutment with flat stop surfaces 66b. Cantilevered stop arms 56 are sufficiently flexible to yield and provide a resistance to warn an operator to release the excessive forces.

## Claims

1. A memory card connector (32) for receiving a memory card (44) having a plurality of conductive contacts (44a), comprising:
an insulative housing (40) mounting a plurality of conductive terminals (68);
a cover (42) having receptacle means (46 - 52) for receiving the memory card, the cover being pivotally mounted on the housing for pivotal movement between an open position to allow the memory card to be inserted into the receptacle means and a closed position bringing the contacts of the memory card into engagement with the terminals on the housing; a generally flat first stop surface (66b) on the housing; and
a restraining member (56) on the cover (42) defining a generally flat second stop surface which is positioned in relation to the generally flat first stop surface (66b) such that the generally flat second stop surface comes into surface contact with the first flat stop surface (66b) on the housing (40) when the cover is opened to prevent the cover from being opened beyond a predetermined amount, **characterized in** said surface contact constituting a flat surface engagement between the cover and the housing.

2. The memory card connector of claim 1 wherein said cover (42) is stamped and formed of sheet metal material, and the restraining member (56) is formed integrally therewith.

3. The memory card connector of claim 1 wherein said housing (40) is molded of dielectric plastic material and said first flat stop surface (66b) is molded on outside surface of the housing.

4. The memory card connector of claim 1 wherein said restraining member comprises a stop arm (56) cantilevered from a rear end (42a) of the cover (42) near a rear-pivot means (58b, 62) between the cover and the housing, and said first flat stop surface (66b) is located at a rear end of the housing.

5. The memory card connector of claim 1, including pivot means (58b, 62) between the housing (40) and the cover (42) and defining a pivot axis (60) about which the cover rotates between said open and closed positions, the housing having an arcuate surface (66a) concentric with the pivot axis and leading into the first flat stop surface (66b), and the second flat stop surface of the restraining member (56) riding over said arcuate surface and against the first flat stop surface when the cover is opened.

## Patentansprüche

1. Speicherkartenverbinder (32) zum Aufnehmen einer Speicherkarte (44) mit einer Mehrzahl von leitfähigen Kontakten (44a), umfassend:
ein isolierendes Gehäuse (40), in welchem eine Mehrzahl von leitfähigen Anschlusskontakten (68) montiert sind;
eine Abdeckung (42) mit Aufnahmemitteln (46 - 52) zur Aufnahme der Speicherkarte, wobei die Abdeckung schwenkbar an dem Gehäuse montiert ist, und zwar im Hinblick auf eine Schwenkbewegung zwischen einer offenen Stellung, damit die Speicherkarte in die Aufnahmemittel eingefügt werden kann, und einer geschlossenen Stellung, bei welcher die Kontakte der Speicherkarte in Anlage an die Anschlusskontakte an dem Gehäuse gebracht werden;
eine generell ebene erste Anschlagfläche (66b) an dem Gehäuse; und
ein Hinderungselement (56) an der Abdeckung (42), welches eine generell ebene zweite Anschlagfläche bildet, die in Bezug auf die generell ebene erste Anschlagfläche (66b) derart positioniert ist, dass die generell ebene zweite Anschlagfläche in Oberflächenkontakt zu der ersten ebenen Anschlagfläche (66b) an dem Gehäuse (40) kommt, wenn die Abdeckung geöffnet wird, um zu verhindern, dass die Abdeckung über ein vorgegebenes Maß hinaus geöffnet wird,
**dadurch gekennzeichnet, dass**
der Oberflächenkontakt eine ebene Anlage von Oberflächen zwischen der Abdeckung und dem Gehäuse darstellt.

2. Speicherkartenverbinder nach Anspruch 1, bei welchem die Abdeckung (42) aus Metallblechmaterial gestanzt und geformt ist und das Hinderungselement (56) integral mit dieser ausgebildet ist.

3. Speicherkartenverbinder nach Anspruch 1,
bei welchem das Gehäuse (40) aus dielektrischem Kunststoffmaterial geformt ist und die erste ebene Anschlagfläche (66b) an der Außenseite des Gehäuses geformt ist.

4. Speicherkartenverbinder nach Anspruch 1,
bei welchem das Hinderungselement einen Anschlagarm (56) umfasst, der von einem rückwärtigen Ende (42a) der Abdeckung (42) in der Nähe eines rückwärtigen Schwenkmittels (58a, 62) zwischen der Abdeckung und dem Gehäuse auskragt, und bei welchem die erste ebene Anschlagfläche (66b) an einem rückwärtigen Ende des Gehäuses positioniert ist.

5. Speicherkartenverbinder nach Anspruch 1,
welcher Schwenkmittel (58a, 62) zwischen dem Gehäuse (40) und der Abdeckung (42) umfasst und für welchen eine Schwenkachse (60) definiert ist, um die sich die Abdeckung zwischen der offenen und der geschlossenen Stellung dreht, wobei das Gehäuse eine bogenförmige Oberfläche (66a) aufweist, die konzentrisch zu der Schwenkachse ausgebildet ist und in die zweite ebene Anschlagfläche (66b) übergeht, und wobei die zweite ebene Anschlagfläche über die bogenförmige Oberfläche und an die erste ebene Anschlagfläche gleitet, wenn die Abdeckung geöffnet wird.

## Revendications

1. Connecteur (32) de carte mémoire prévu pour recevoir une carte mémoire (44) comportant une pluralité de contacts conducteurs (44a), comprenant :
un boîtier isolant (40) logeant une pluralité de bornes conductrices (68) ;
un élément de recouvrement (42) comportant des moyens (46 à 52) formant réceptacle destinés à recevoir la carte mémoire, l'élément de recouvrement étant monté de manière pivotante sur le boîtier pour un mouvement pivotant entre une position ouverte permettant d'introduire la carte mémoire dans les moyens formant réceptacle et une position fermée amenant les contacts de la carte mémoire en engagement avec les bornes situées sur le boîtier ;
une première surface globalement plate (66b) de butée réalisée sur le boîtier ; et
un élément (56) de retenue situé sur l'élément de recouvrement (42) définissant une seconde surface globalement plate de butée qui est positionnée par rapport à la première surface globalement plate (66b) de butée de sorte que la seconde surface globalement plate de butée vient en contact de surface avec la première surface plate (66b) de butée réalisée sur le boîtier (40) lorsque l'élément de recouvrement est ouvert pour empêcher l'élément de recouvrement de s'ouvrir de plus d'une quantité prédéterminée, **caractérisé en ce que** ledit contact de surface constitue un engagement de surfaces plates entre l'élément de recouvrement et le boîtier.

2. Connecteur de carte mémoire selon la revendication 1, dans lequel ledit élément de recouvrement (42) est découpé et formé à la presse à partir de matière métallique en feuille, et l'élément (56) de retenue est formé d'un seul tenant avec celui-ci.

3. Connecteur de carte mémoire selon la revendication 1, dans lequel ledit boîtier (40) est moulé à partir d'un matériau de plastique diélectrique et ladite première surface plate (66b) de butée est moulée sur la surface extérieure du boîtier.

4. Connecteur de carte mémoire selon la revendication 1, dans lequel ledit élément de retenue comprend un bras (56) de butée en porte-à-faux d'une extrémité arrière (42a) de l'élément de recouvrement (42) à proximité de moyens (58b, 62) formant pivot arrière entre l'élément de recouvrement et le boîtier, et ladite première surface plate (66b) de butée est située au niveau de l'extrémité arrière du boîtier.

5. Connecteur de carte mémoire selon la revendication 1, incluant des moyens (58b, 52) formant pivot entre le boîtier (40) et l'élément de recouvrement (42) et définissant un axe (60) de pivot autour duquel l'élément de recouvrement tourne entre lesdites positions ouverte et fermée, le boîtier comportant une surface arquée (66a) concentrique à l'axe de pivot et se terminant en la première surface plate (66b) de butée, et la seconde surface plate de butée de l'élément (56) de retenue passant par-dessus ladite surface arquée et venant contre la première surface plate de butée lors de l'ouverture de l'élément de recouvrement.
